# EUROPEAN PATENT APPLICATION

(11) **EP 2 023 335 A2**
(43) Date of publication of application: **11.02.2009**
(21) Application number: 08013345.7
(22) Date of filing: 24.07.2008
(51) Int. Cl.: G09G 5/14

(54) **Method and apparatus for controlling display of windows**

(30) Priority: 24.07.2007 JP 2007192406
(71) Applicant: NTT DoCoMo, Inc., Chiyoda-ku Tokyo 100-6150 (JP)
(72) Inventor: Kano, Izua, Tokyo 100-6150 (JP); Yamada, Eiju, Tokyo 100-6150 (JP); Murakami, Keiichi, Tokyo 100-6150 (JP); Onda, Yasushi, Tokyo 100-6150 (JP); Yamada, Kazuhiro, Tokyo 100-6150 (JP); Kamiya, Dai, Tokyo 100-6150 (JP)
(74) Representative: HOFFMANN EITLE

(57) **Abstract**

A CPU 102, in a state in which multiple windows are being displayed in a display 107, when execution of a program is newly instructed, judges whether or not it is possible to display a window of the program that has been instructed to be executed without overlapping windows that are already being displayed. The CPU 102, when the window to be newly displayed will overlap a window that is already being displayed, minimizes the window with the largest size among the windows that are already being displayed to perform display, and displays the window of the program instructed to be executed in a display 107.

## Description

### BACKGROUND

### Technical Field

The present invention relates to a graphical user interface.

### Related Art

In computer apparatuses that execute an application program on an operating system, there is a computer apparatus that executes multiple application programs in parallel, and displays a window that serves as a user interface for each application, but when many programs are executed so that there are many windows, the display screen becomes complicated. In this case, the user organizes the display screen by converting a window of an application that has a low priority of use to an icon.

However, because it is troublesome to the user to select a window to convert to an icon and perform an operation of converting that window to an icon, as an apparatus that eliminates such trouble, for example, the information display apparatus disclosed in Patent Document 1 has been devised.

The information display apparatus disclosed in Japanese Patent application No. JP 2005-4396A, in a state in which multiple icons are being displayed, when displaying another icon, reduces the area of the icons already being displayed to display the icon on a screen. By using this technology, when newly displaying a window it is possible to display the window without overlapping, because other windows are reduced in size.

### SUMMARY

Using the technology disclosed in JP 2005-4396A, a window is automatically reduced in size and displayed without windows overlapping. However, when windows are reduced in size again and again each time that a new window is opened, the area in which information can be displayed in one window becomes small, which is inconvenient to the user.

The present invention was made against the background described above, and it is an object of the invention to, when newly displaying a window, reduce the size of a window that is already being displayed such that the newly displayed window does not overlap another window, and reduce the number of windows that are reduced in size.

In an aspect of the invention, there is provided an information processing apparatus including: a first memory that stores at least one application program; an operating unit operated by a user; a second memory that stores a size of a window of an application programs displayed on a display screen; an execution unit that executes an application program stored in the first memory in response to an instruction input from the operating unit; and a display controller that causes a window of an application program executed by the execution unit to being displayed on the display screen, wherein, in a case where two or more windows are being displayed on the display screen when the execution unit initiates execution of an application program, and the two or more windows being displayed and the window of the application program to be executed by the execution unit cannot be displayed within a display region of the display screen without overlapping, the display controller reads, from the second memory, the size of each window being displayed, and minimizes the window whose size is the largest, and displays the minimized window on the display screen.

Preferably, when the two or more windows cannot be displayed without overlapping within the display region of the display screen after minimization the window with the largest size, the display controller repeatedly minimizes the windows whose size is the largest, wherein each time that one window is minimized, determines whether it is possible to display windows that have been minimized, windows that have not been minimized, and a window of an application program to be executed by the execution unit within the display region of the display without overlapping, and when determined the display is possible, the display controller displays the windows that have been minimized, the windows that have not been minimized, and the window of the application program to be executed by the execution unit on the display screen.

In another aspect of the invention, there is provided an information processing apparatus including: a first memory that stores at least one application program; an operating unit operated by a user; a changing unit that changes the size of a window of an application program according to and instruction input from the operating unit, the window being displayed in the display screen; a second memory that stores a size of a window of an application program displayed on a display screen; an execution unit that executes application programs stored in the first memory in response to an instruction input from the operating unit; and a display controller that causes a window of an application program executed by the execution unit to be displayed on the display screen, wherein, in a case where two or more windows are being displayed on the display screen when the changing unit changes the size of a window displayed on the display screen and the two or more windows being displayed and the window whose size has been changed cannot be displayed within a display region of the display screen without overlapping, the display controller reads, from the second memory, the size of each window whose size is not being changed, and minimizes the window whose size is the largest, and displays the minimized window on the display screen.

Preferably, when the two or more windows cannot be displayed without overlapping within the display region of the display screen after minimization the window with the largest size, the display controller repeatedly minimizes the windows whose size is the largest, wherein each time that one window is minimized, determines whether it is possible to display windows that have been minimized, windows that have not been minimized, and a window whose size has been changed within the display region of the display without overlapping, and when determined the display is possible, the display controller displays the windows that have been minimized, the windows that have not been minimized, and the window whose size has been changed on the display screen.

Preferably, the display controller displays each window such that a plurality of windows displayed on the display screen do not overlap.

In yet another aspect of the invention, there is provided a method for controlling display of windows of application programs, the method comprising : storing the size of windows of application programs being displayed on a display screen in a memory; executing an application program stored in the memory in response to an instruction input from an operating unit; and in a case where two or more windows are being displayed on the display screen when execution of an application program is initiated, and the two or more windows being displayed and the window of the application program to be executed cannot be displayed within a display region of the display screen without overlapping, reading, from the memory, the size of each window being displayed, and minimizing the window whose size is the largest, and displaying the minimized window on the display screen.

In yet another aspect of the invention, there is provided a method for controlling display of windows of application programs, the method comprising : storing a size of windows of application programs are displayed on a display screen in a memory; executing an application program stored in the memory in response to an instruction input from an operating unit; and in a case where two or more windows are being displayed on the display screen when a window displayed on the display screen is changed in size, and the two or more windows being displayed and the window cannot be displayed within a display region of the display screen without overlapping, reading, from the memory, the size of each window whose size is not being changed, and minimizing the window whose size is the largest, and displaying the minimized window on the display screen.

According to the invention, when newly displaying a window, a window that is already being displayed is reduced in size such that the newly displayed window does not overlap another window, and it is possible to reduce the number of windows that are reduced in size.

### BRIEF DESCRIPTION OF THE DRAWINGS

Exemplary embodiment(s) of the present invention will be described in detail based on the following figures, wherein:
FIG 1 shows an external view of a mobile phone according to a first exemplary embodiment of the invention;
FIG 2 is a block diagram that shows the hardware configuration of the mobile phone in FIG 1;
FIG 3 shows the format of a window table TB1 stored by the mobile phone in FIG 1;
FIG 4 shows the configuration of a Java runtime environment that is realized in a mobile phone;
FIG 5 is a flowchart that shows the flow of processing performed by a CPU 102;
FIG 6 shows an arrangement of windows in a virtual display region;
FIG 7 shows an arrangement of windows in a virtual display region;
FIG 8 is a flowchart that shows the flow of processing performed by the CPU 102;
FIG 9 shows an arrangement of windows in a virtual display region;
FIG 10 shows an arrangement of windows;
FIG 11 shows an arrangement of windows in a virtual display region; and
FIG 12 shows an arrangement of windows in a virtual display region.

### DETAILED DESCRIPTION

### Configuration of Exemplary Embodiment

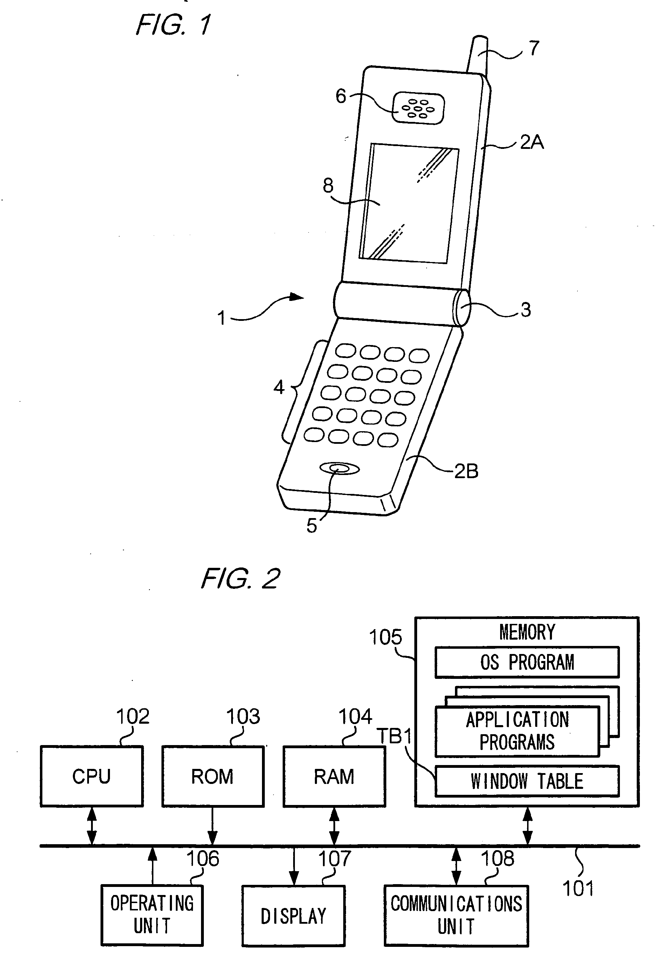

FIG 1 shows an external view of a folding mobile phone 1 that is an example of an information processing apparatus according to an exemplary embodiment of the invention. As shown in FIG 1, this mobile phone 1 has a first case body 2A and a second case body 2B. The first case body 2A and the second case body 2B are linked via a hinge 3 near their respective end edges. A user of this mobile phone 1 uses the mobile phone 1 with both case bodies in an open state as shown in FIG 1, to perform voice communications or data communications.

An operating key group 4 of multiple operating keys that are operated by the user, and a microphone 5 for inputting the user's voice, are disposed in the second case body 2B. A CPU (Central Processing Unit) that controls operation of the mobile phone 1, a RAM (Random Access Memory) used as a working area of the CPU, and various electronic components (not shown) such as a nonvolatile memory that stores various programs executed by the CPU, are contained within the second case 2B. On the other hand, a speaker 6 that outputs voice during a voice phone call, an antenna 7 for performing wireless communications between the mobile phone 1 and a wireless base station, a display apparatus 8 that displays text and images, and the like are disposed in the first case body 2A.

FIG 2 is a block diagram that shows the hardware configuration of the mobile phone 1. As shown in FIG 2, the portions of the mobile phone 1 are connected via a bus 101. A communications unit 108 is provided with the antenna 7, and performs voice communications or data communications with a wireless base station that relays communications performed by the mobile phone 1. An operating unit 106 has the operating key group 4, which is provided with, for example, a numeric keypad for performing input of numbers or text, various keys that instruct to make a call, clear, or end a call, keys for performing menu operations, and power keys for turning power on/off. A user of the mobile phone 1 operates the keys provided in the operating unit 106 to input various instructions to the mobile phone 1. A display 107 is provided with the display apparatus 8, and displays, for example, text, images, and menu screens for operating the mobile phone 1.

Stored in a ROM (Read Only Memory) 103 are an IPL (Initial Program Loader), an OS program that realizes the function of an operating system (below, referred to as an OS), and a Java platform program that realizes a Java (registered trademark) runtime environment. A memory 105 has a nonvolatile memory (not shown), and stores various programs such as an application program that realizes a music playback function (program name: "music"), and application programs that realize a game function (program names: "game_1", "game_2"). These application programs are composed of a JAR (Java Archive) file that includes a program (byte code) created using the Java programming language, and an ADF (Application Descriptor File) that describes data related to the JAR file.

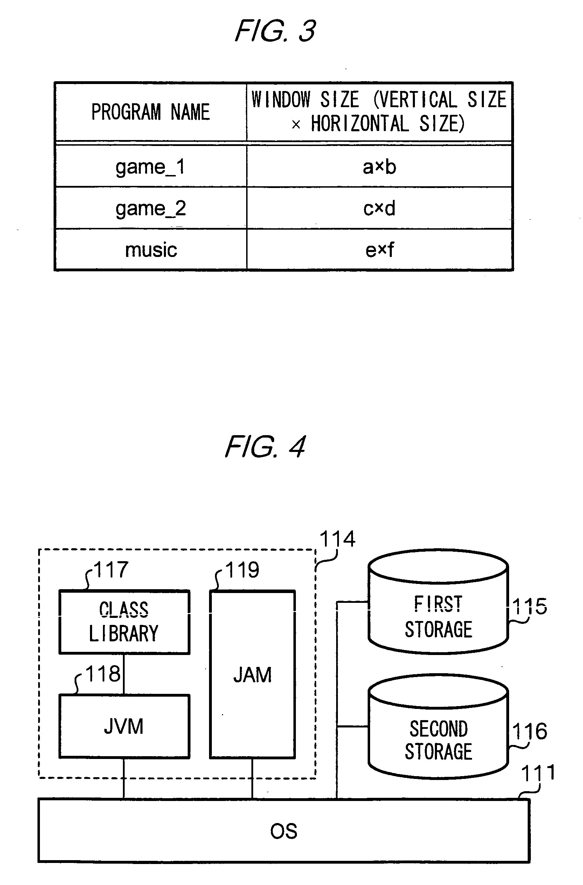

A window table TB 1 is stored in the memory 105. FIG 3 shows an example of the format of the window table TB 1. The window table TB 1 has a "program name" field and a "window size" field, and the program name of application programs that have been executed by a CPU 102 are stored in the "program name" field. Stored in each cell of the "window size" field is the size of the window (window vertical size × window horizontal size) for the program with the program name stored in the same record.

In the mobile phone 1, when power is supplied from a power source (not shown), the IPL stored in the ROM 103 is executed by the CPU 102. When the CPU 102 executes the IPL, the OS program stored in the ROM 103 is executed by the CPU 102, thus realizing basic functions as a mobile phone, such as input/output functions like input from the operating unit 106 and screen output to the display 107, access to the memory 105, execution of various programs stored in the memory 105, a voice communications function, and a data communications function.

When the OS program is executed, a GUI (Graphical User Interface) function and a multi-tasking function that executes multiple programs in parallel are executed in the mobile phone 1. When the mobile phone 1 executes an application program in response to an instruction from the user, a window that serves as an interface between the user and the application program is displayed in the display 107, for each executed program. By operating the operating unit 106, the user can switch the window to which input from the user is transferred, and in a state in which focus is on a window, by operating the operating unit 106, the user can change the display position or the display size of the window.

The CPU 102 executes the Java platform program after executing the OS program. Thus, a Java runtime environment 114 shown by way of example in FIG. 4 is realized on the OS, and a first storage 115 and a second storage 116 are secured in the nonvolatile memory of the memory 105. The Java runtime environment 114 is composed of a class library 117, a JVM (Java Virtual Machine) 118, and a JAM (Java Application Manager) 119. The class library 117 combines a group of program modules (classes) that have particular functions in one file. The JVM 118 has a function to interpret and execute byte code provided as a Java application program. The JAM 119 has a function to download and install, and manage startup, termination, and the like of Java application programs.

The first storage 115 is a region where a Java application program (a Jar file and an ADF) downloaded under management of the JAM 119 is stored. The second storage 116 is a region for storing data generated when executing Java application programs, after execution is terminated, and in the second storage 116, an individual storage region is allocated to each Java application program that has been installed. The data of a storage region allocated to a particular Java application program can be rewritten only while that Java application program is being executed, and cannot be rewritten by another Java application program.

When, in a state in which this Java runtime environment 114 is being executed, the user operates the operating unit 106 to instruct execution of a Java application program, the Java application program stored in the first storage is interpreted and executed by the JVM 118, and a window that corresponds to the program is displayed in the display 107.

### Operation of Exemplary Embodiment

### Operation When Multiple Application Programs Have Been Executed

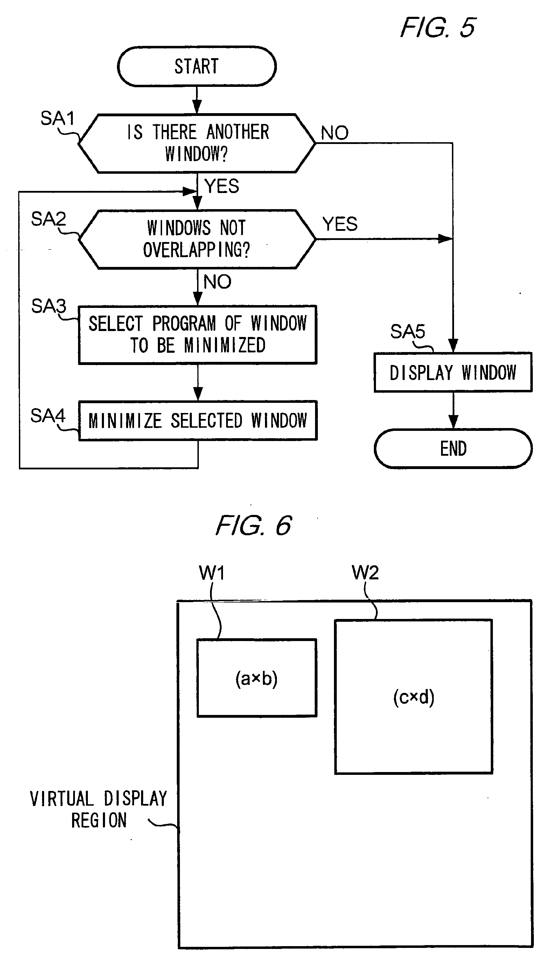

Next is a description of operation when multiple application programs have been executed in this exemplary embodiment. First, when the user operates keys of the operating unit 106 to instruct the mobile phone 1 to execute an application program with the program name "game_1", the CPU 102 reads the program instructed to be executed from the memory 105 and executes that program. When the CPU 102 displays a window for the application program, the processing shown in FIG 5 is performed. Specifically, first, the CPU 102 judges whether or not a window of another program is being displayed in the display 107 (Step SA1). In a case where no windows are being displayed (Step SA1; NO), the CPU 102 displays a window of predetermined size in the display 107 (Step SA5).

Next, when the user operates keys of the operating unit 106 to instruct the mobile phone 1 to execute an application program with the program name "game 2", the CPU 102 reads the program instructed to be executed from the memory 105 and executes that program. When the CPU 102 displays a window for the application program, the CPU 102 judges whether or not a window of another program is being displayed in the display 107 (Step SA1). The window for the application program with the program name "game_1" has already been displayed, so the judgment is YES in Step SA1.

Next, the CPU 102 judges whether or not the window that is already being displayed and the window of the program that was instructed to be executed can be displayed in the display 107 without overlapping (Step SA2). Specifically, the CPU 102 generates a virtual display region with the same size as the display region of the display 107, and arranges the window of each program in this virtual display region. First, the CPU 102 arranges the window W1 of the program with the program name "game_1" in the virtual display region as shown in FIG 6. Next, the CPU 102 arranges a window W2 of the program with the program name "game_2" that was instructed to be executed.

As shown in FIG 6, in the virtual display region, in a case where it is possible to arrange the window for each program such that the windows do not overlap (Step SA2; YES), the CPU 102, using the same arrangement as the virtual display region, displays the window for the program with the program name "game_1" and the window for the program with the program name "game_2" in the display 107 (Step SA5).

Next, when the user operates keys of the operating unit 106 to instruct the mobile phone 1 to execute an application program with the program name "music", the CPU 102 reads the program instructed to be executed from the memory 105 and executes that program. When the CPU 102 displays a window for the application program, the CPU 102 judges whether or not a window of another program is being displayed in the display 107 (Step SA1). The window W1 for the application program with the program name "game_1" and the window W2 for the application program with the program name "game 2" have already been displayed, so the judgment is YES in Step SA1.

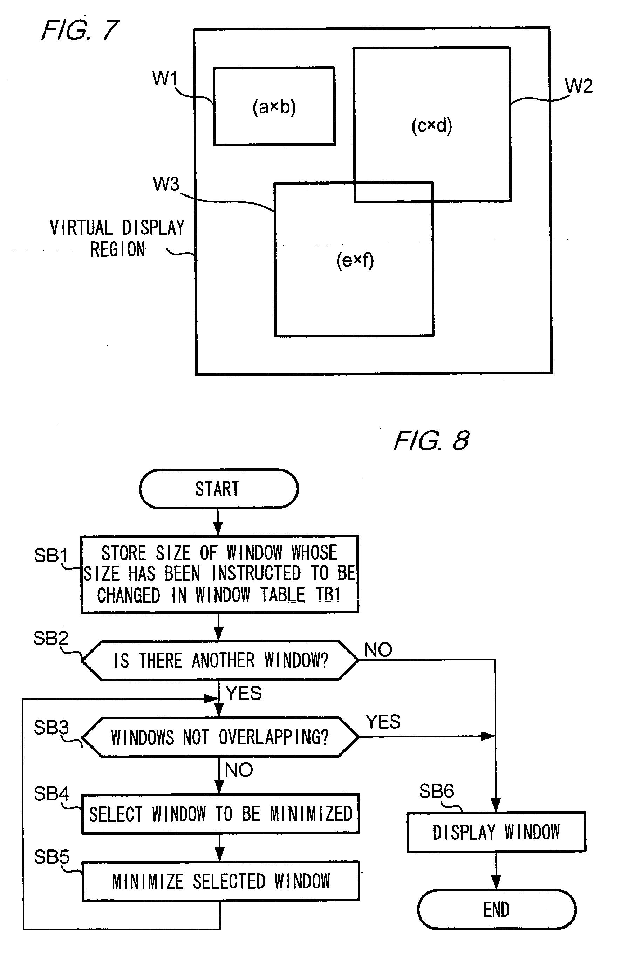

Next, the CPU 102 judges whether or not the window that is already being displayed and the window of the program that was instructed to be executed can be displayed in the display 107 without overlapping (Step SA2). Specifically, the CPU 102 arranges the window of each program in the virtual display region. First, as shown in FIG 7, the CPU 102 arranges the window W1 1 of the program with the program name "game_1" in the virtual display region, and arranges the window W2 of the program with the program name "game_2" in the virtual display region. Next, the CPU 102 arranges a window W3 of the program with the program name "music" that was instructed to be executed. As shown in FIG 7, in a case where it is not possible to arrange the window for each program such that the windows do not overlap (Step SA2; NO), the CPU 102 selects a window to be minimized (Step SA3).

Specifically, the CPU 102 reads the size (a×b) of the window W1 and the size (c×d) of the window W2 that are already being displayed from the window table TB 1. Then the read window sizes are compared and the window with the largest size is identified. As shown in FIG 7, the size of window W2 is larger, so the CPU 102 selects the window W2 as the window to be minimized.

When the CPU 102 selects the window that will be minimized, the CPU 102 minimizes this window, and stores the window size when minimized (c1×d1) in the cell for window size in the record for the program name "game_2" (Step SA4). Then the CPU 102 returns the flow of processing to Step SA2.

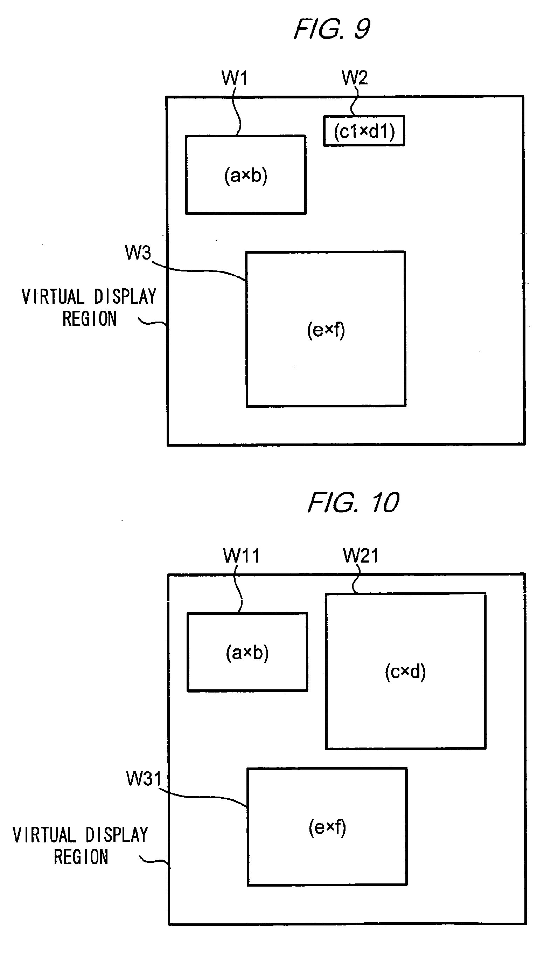

Then the CPU 102 again judges whether or not the window of each program will be displayed in the display 107 without overlapping (Step SA2). First, the CPU 102 arranges the window W2 that was minimized in the above processing in the virtual display region as shown in FIG 9, and then arranges the window W1 of the program with the program name "game_1" in the virtual display region. Then, the CPU 102 arranges the window W3 of the program with the program name "music" that was instructed to be executed. As shown in FIG 9, in the virtual display region, in a case where it is possible to arrange the window for each program such that the windows do not overlap (Step SA2; YES), the CPU 102, using the same arrangement as the virtual display region, displays the window for each program in the display 107 (Step SA5).

In a case where it is judged NO in Step SA2 after returning the processing to Step SA2 again, the CPU 102 selects the window that will be minimized, and here, at this time only the size of the windows that have not been minimized is read from the window table TB 1. The window with the largest size among the windows that have not been minimized is selected as the window to be minimized.

Thus, with the present exemplary embodiment, in a case in which when newly displaying a window, the window cannot be arranged without overlapping, a window with the largest size is minimized first, thereby insuring a display region. Minimization is performed beginning from the window with the largest size, so it is possible to reduce the number of windows that are minimized, while insuring a display region.

### Operation When Size of a Window Was Changed When Multiple Windows Are Displayed

Next is a description of operation when, from a state in which multiple windows are being displayed, the size of a window has been changed. The following is a description of operation when the size of a window is changed, from a state in which a window W11 of the program with program name "game_1", a window W21 of the program with program name "game_2", and a window W31 of the program with program name "music" are displayed in the display 107 as shown in FIG 10.

First, when the user operates the keys of the operating unit 106 to instruct the mobile phone 1 to change the size of the window 31 of the program with the program name "music", the CPU 102 changes the size of the window W31. Then the CPU 102 stores the size of the window whose size has been changed in the window table TB1 (FIG. 8: Step SB1). First, when the size of the window W31 of the program with the program name "music" has been changed from "e×f" to "e1×f1", the CPU 102 stores this window size "e1×f1" after the change in the "window size" cell of the record for the program name "music".

Next, the CPU 102 judges whether or not a window other than the window whose size was instructed to be changed is being displayed in the display 107 (Step SB2). Because windows other than the window whose size was instructed to be changed are being displayed in the display 107, the judgment of the CPU 102 is YES in Step SB2.

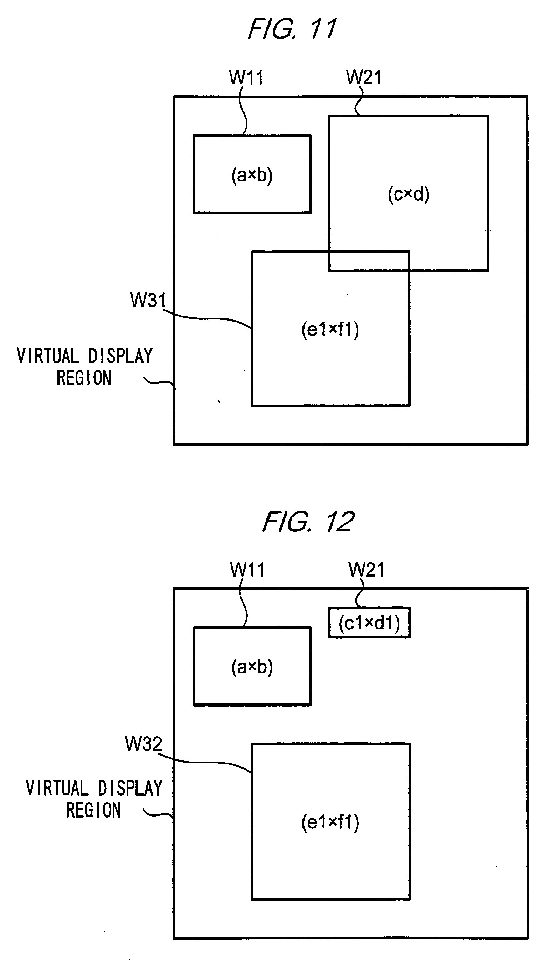

Then, the CPU 102 judges whether or not the window W31 after the size change and the other windows will be displayed in the display 107 without overlapping (Step SB3). Specifically, the CPU 102 generates a virtual display region with the same size as the display region of the display 107, and arranges each window in this virtual display region. First, the CPU 102 arranges the window W11 of the program with the program name "game_1" whose size was not changed in the virtual display region, and then arranges the window W21 of the program with the program name "game_2" whose size was not changed in the virtual display region. Next the CPU 102 tries arranging the window W31 of the program with the program name "music" in the virtual display region. As shown in FIG 11, in a case where it is not possible to arrange the window for each program such that the windows do not overlap when the window W31 of the program with the program name "music" whose size was changed is arranged (Step SB3; NO), the CPU 102 selects a window to be minimized (Step SB4).

Specifically, the CPU 102 reads the size (a×b) of the window W11 and the size (c×d) of the window W21 whose size has not been changed from the window table TB 1. Then the read window sizes are compared and the window with the largest size is identified. As shown in FIG 11, the size of window W21 is larger, so the CPU 102 selects window W21 as the window to be minimized.

When the CPU 102 selects the window that will be minimized, the CPU 102 minimizes this window, and stores the window size when minimized (c1×d1) in the cell for window size in the record for the program name "game_2" (Step SB5). Then the CPU 102 returns the flow of processing to Step SB3.

Then the CPU 102 again judges whether or not the window of each program will be displayed in the display 107 without overlapping (Step SB3). First, the CPU 102 arranges the window W21 that has been minimized with the processing described above in the virtual display region as shown in FIG. 12, and then arranges the window W11 of the program with the program name "game_1" in the virtual display region. Then, the CPU 102 arranges the window W31 whose size was changed. As shown in FIG 12, in the virtual display region, in a case where it is possible to arrange the window for each program such that the windows do not overlap (Step SB3; YES), the CPU 102, using the same arrangement as the virtual display region, displays the window for each program in the display 107 (Step SB6).

In a case where it is judged NO in Step SB3 after returning the processing to Step SB3 again, the CPU 102 selects the window that will be minimized, and here, at this time only the size of the windows that have not been minimized is read from the window table TB1. The window with the largest size among the windows that have not been minimized is selected as the window to be minimized.

Thus, as described above, with the present exemplary embodiment, in a case in which when the size of a window has been changed in a state in which multiple windows are being displayed, the windows cannot be arranged without overlapping, the window with the largest size is minimized first, so it is possible to reduce the number of windows that are minimized while insuring a display region.

### Modified Examples

An exemplary embodiment of the invention was described above, but the invention is not limited by the exemplary embodiment described above; various other exemplary embodiments are also possible. For example, in an exemplary embodiment of the invention, the above exemplary embodiment may be modified as follows.

The information processing apparatus that performs the above operations is not limited to being a mobile phone, and may also be another computer apparatus such as a personal computer device or a PDA (Personal Digital Assistant), provided that the information processing apparatus executes multiple programs in parallel, and displays a window that serves as an interface with the user for each program.

In the above exemplary embodiment, a window is minimized, however a configuration may also be adopted in which the window is not minimized to a smallest predetermined size, but rather the window is displayed converted to an icon (a picture that expresses the function of the program).

The application programs subject to window size control are not limited to Java application programs. In the exemplary embodiment described above, the CPU performs all of the processing to read window size, compare the size of each window, determine the window that should be minimized, and the like, but this is not a limitation; for example, a configuration may be adopted in which an independent processor or function module is caused to execute the respective processing. That is, provided that the functions of the invention described above can be realized, the form of that implementation is not limited to the hardware configuration and software configuration in the exemplary embodiment described above.

## Claims

1. An information processing apparatus comprising:
a first memory that stores at least one application program;
an operating unit operated by a user;
a second memory that stores a size of a window of application programs displayed on a display screen;
an execution unit that executes an application program stored in the first memory in response to an instruction input from the operating unit; and
a display controller that causes a window of an application program executed by the execution unit to be displayed on the display screen, wherein, in a case where two or more windows are being displayed on the display screen when the execution unit initiates execution of an application program, and the two or more windows being displayed and the window of the application program to be executed by the execution unit cannot be displayed within a display region of the display screen without overlapping, the display controller reads, from the second memory, the size of each window being displayed, and minimizes the window whose size is the largest, and displays the minimized window on the display screen.

2. The information processing apparatus according to claim 1, wherein when the two or more windows cannot be displayed without overlapping within the display region of the display screen after minimization the window with the largest size, the display controller repeatedly minimizes the windows whose size is the largest, wherein each time that one window is minimized, determines whether it is possible to display windows that have been minimized, windows that have not been minimized, and a window of an application program to be executed by the execution unit within the display region of the display without overlapping, and when determined the display is possible, the display controller displays the windows that have been minimized, the windows that have not been minimized, and the window of the application program to be executed by the execution unit on the display screen.

3. An information processing apparatus comprising:
a first memory that stores at least one application program;
an operating unit operated by a user;
a changing unit that changes the size of a window of an application program according to and instruction input from the operating unit, the window being displayed in the display screen;
a second memory that stores a size of a window of an application program displayed on a display screen;
an execution unit that executes an application program stored in the first memory in response to an instruction input from the operating unit; and
a display controller that causes a window of an application program executed by the execution unit to be displayed on the display screen, wherein, in a case where two or more windows are being displayed on the display screen when the changing unit changes the sizes of a window displayed on the display screen, and the two or more windows being displayed and the window whose size has been changed cannot be displayed within a display region of the display screen without overlapping, the display controller reads, from the second memory, the size of each window whose size is not being changed, and minimizes the window whose size is the largest, and displays the minimized window on the display screen.

4. The information processing apparatus according to claim 3, wherein when the two or more windows cannot be displayed without overlapping within the display region of the display screen after minimization the window with the largest size, the display controller repeatedly minimizes the windows whose size is the largest, wherein each time that one window is minimized, determines whether it is possible to display windows that have been minimized, windows that have not been minimized, and a window whose size has been changed within the display region of the display without overlapping, and when determined the display is possible, the display controller displays the windows that have been minimized, the windows that have not been minimized, and the window whose size has been changed on the display screen.

5. The information processing apparatus according to claim 1 or 3, wherein the display controller displays each window such that a plurality of windows displayed on the display screen do not overlap.

6. A computer program product for controlling display of windows of application programs, the program causing a computer to execute:
storing a size of a window of an application program displayed on a display screen in a memory;
executing an application program stored in the memory in response to an instruction input from an operating unit; and
in a case where two or more windows are being displayed on the display screen when execution of an application program is initiated, and the two or more windows being displayed and the window of the application program to be executed cannot be displayed within a display region of the display screen without overlapping, reading, from the memory, the size of each window being displayed, and minimizing the window whose size is the largest, and displaying the minimized window on the display screen.

7. A computer program product for controlling display of windows of application programs, the program causing a computer to execute:
storing a size of a window of an application programs displayed on a display screen in a memory;
executing an application program stored in the memory in response to an instruction input from an operating unit; and
in a case where two or more windows are being displayed on the display screen when a window displayed on the display screen is changed in size, and the two or more windows being displayed and the window whose size has been changed cannot be displayed within a display region of the display screen without overlapping, reading, from the memory, the size of each window whose size is not being changed, and minimizing the window whose size is the largest, and displaying the minimized window on the display screen.
